# EUROPÄISCHE PATENTANMELDUNG

(11) **EP 2 361 947 A1**
(43) Veröffentlichungstag der Anmeldung: **31.08.2011**
(21) Anmeldenummer: 10001782.1
(22) Anmeldetag: 22.02.2010
(51) Int. Cl.: C08J 7/04, C08J 9/36

(54) **Kunststoffformkörper aus EPP**

(71) Anmelder: Truma Gerätetechnik GmbH & Co. KG, 85640 Putzbrunn (DE); Kunststoffwerk Katzbach GmbH & Co. KG, 93413 Cham (DE); Mäder Plastilack AG, 96129 Strullendorf (DE)
(72) Erfinder: Schaurer, Oliver, 85445 Oberding (DE); Krieger, Helmut, A., 93499 Zandt (DE); Letsch, Volker, 96135 Stegaurach (DE); Kestler, Georg, 96114 Hirschaid (DE); Konrad, Georg, 96129 Strullendorf (DE)
(74) Vertreter: Müller - Hoffmann & Partner

(57) **Zusammenfassung**

Ein Kunststoffformkörper (1) weist einen Grundkörper (2) aus expandiertem Polypropylen (EPP) auf, wobei wenigstens eine Dekorfläche (3) des Grundkörpers (2) vorgesehen ist, die bei bestimmungsgemäßer Verwendung des Kunststoffformkörpers (1) eine bestimmte Dekorfunktion zu erfüllen hat. Auf der Dekorfläche (3) des Grundkörpers (2) ist eine Primer-Schicht (6) aufgebracht, auf der wiederum eine Füller-Schicht (7) aufgebracht ist. Die Primer-Schicht (6); dient zum Halten der Füller-Schicht (7) auf dem Grundkörper, während die Füller-Schicht (7) zum Ausgleichen von Unebenheiten auf der Dekorfläche (3) dient und einen mechanischen Schutz der Dekorfläche (3) bildet. Auf der Füller-Schicht (7) kann eine Farb-Schicht (8, 9) aufgebracht werden, um bestimmten optischen Anforderungen zu genügen.

## Beschreibung

Die Erfindung betrifft einen Kunststoffformkörper aus expandiertem Polypropylen (EPP).

Der Werkstoff EPP wird inzwischen in zahlreichen Anwendungen als Leichtbauwerkstoff eingesetzt. Er ist umweltfreundlich und problemlos wiederverwendbar. Zudem enthält er keine Kohlenwasserstoffe, keine flüchtigen organischen Komponenten oder andere Bestandteile, die als schädlich für die Umwelt gelten. EPP wird seit längerem insbesondere auch in der Automobilindustrie eingesetzt, und zwar nicht nur Verbesserung der Fahrzeugsicherheit sondern auch zur Gewichtseinsparung. EPP ist ungiftig und gleich in mehrfacher Hinsicht recyclingfähig. Außerdem kommt EPP in erheblichem Umfang als Rohmaterial für wiederverwendbare Verpackungen zum Einsatz.

Aufgrund seiner Strapazierfähigkeit und seinen energiesparenden Eigenschaften trägt EPP dazu bei, die Vielfalt an nur für eine einmalige Verwendung geeigneten Materialien zu reduzieren.

Im Fertigungsprozess werden expandierte Polypropylen-Granulatpartikel mit Heißdampf in einer vorgegebenen Form (Werkzeug) zu einem Bauteil verschmolzen. Aufgrund eines derartigen Sinterprozesses verschmelzen die Granulatpartikel teilweise miteinander und gehen einen innigen Verbund ein. Die Verschmelzung der Granulatpartikel erfolgt jedoch so, dass sich eine nicht komplett geschlossene Oberfläche ausbildet, die auch als solche erkennbar ist. Aufgrund der nur geringen kosmetischen Qualität der Oberfläche sind EPP-Teile nur begrenzt in optisch anspruchsvolleren Anwendungsfällen einsetzbar.

Das Fertigungsverfahren von EPP-Teilen verlangt es, dass die Werkzeugformen porös sind, so dass Heißdampf durch das Werkzeug von allen Seiten in die Form fließen kann, um ein gleichmäßiges Verschmelzen der Granulatpartikel zu erreichen. Zu diesem Zweck sind in dem Werkzeug so genannte Verdüsungen in Form von Düsen oder ähnlichem ausgebildet. Die Verdüsungen sind über die Fläche der Werkzeugform relativ gleichmäßig zueinander angeordnet. Die Verdüsung kann von verschiedener Form, Länge oder Durchmesser sein. Die Verdüsungen sind an dem fertigen EPP-Produkt leicht durch Erhöhungen oder Vertiefungen erkennbar. Dadurch wird die optische Qualität von EPP-Teilen zusätzlich beeinträchtigt.

Der Werkstoff EPP weist eine nur geringe UV-Stabilität auf. Dadurch wird ein Einsatz von EPP-Teilen im Außenbereich ausgeschlossen, wenn das Teil nicht vor UV-Strahlung geschützt werden kann.

Die Oberfläche von EPP-Teilen ist zudem verhältnismäßig weich und empfindlich gegen die Einwirkung von spitzen Gegenständen bzw. erhöhten lokalen Flächenpressungen.

Zur Verbesserung der optischen Qualität wurde versucht, EPP-Teile mit einer Folie zu beschichten bzw. zu lackieren. Dabei hat sich jedoch herausgestellt, dass sich die Schicht - sofern sie überhaupt auf dem Werkstoff EPP zunächst haftete - nach kurzer Zeit wieder ablöste oder eine zu geringe Bruchdehnung aufwies. Somit konnten keine anspruchsvollen Dekoranforderungen mit entsprechender Funktion erfüllt werden.

Aus diesem Grund ist es bis heute als einzige wirkungsvolle Maßnahme zur Verbesserung der optischen Qualität von EPP-Formteilen bekannt, diese in eine feste Kunststoffschale einzubetten, die dann den gewünschten optischen Eindruck ermöglicht und zudem auch einen mechanischen Schutz bilden kann.

Der Erfindung liegt die Aufgabe zugrunde, einen aus EPP gefertigten Kunststoffformkörper und ein Verfahren zu dessen Herstellung anzugeben, bei dem eine verbesserte optische und mechanische Qualität erreicht werden kann.

Die Aufgabe wird erfindungsgemäß durch einen Kunststoffformkörper nach Anspruch 1 und ein Verfahren zum Herstellen desselben nach Anspruch 15 angegeben.

Ein Kunststoffformkörper weist einen Grundkörper auf, der zumindest teilweise aus expandiertem Polypropylen (EPP) besteht und wenigstens eine Dekorfläche aufweist, die an einer Seite des Grundkörpers vorgesehen ist, die bei bestimmungsgemäßer Verwendung des Kunststoffformkörpers eine bestimmte Dekorfunktion zu erfüllen hat. Auf der Dekorfläche des Grundkörpers ist eine Vorbehandlungs-Schicht aufgebracht, auf der wiederum eine Füller-Schicht (nachfolgend auch als "Füller" bezeichnet) aufgebracht ist. Die Vorbehandlungs-Schicht dient zum Halten der Füller-Schicht auf dem Grundkörper, während die Füller-Schicht zum Ausgleichen von Unebenheiten auf der Dekorfläche dient und einen mechanischen Schutz der Dekorfläche bildet.

Als Dekorfläche wird ein Teil der Oberfläche des Grundkörpers verstanden, der bei der späteren Anwendung des fertig gestellten Kunststoffformkörpers eine bestimmte Dekorfunktion zu erfüllen hat. Unter dem Begriff "Dekorfunktion" sind in diesem Zusammenhang nicht nur rein optische bzw. kosmetische Aufgaben zu verstehen. Vielmehr soll dieser Begriff auch haptische Funktionen oder Schutzfunktionen, d.h. Aufgaben zum Schutz des darunter liegenden Grundkörpers, verstanden werden. Als Schutzfunktion kann der mechanische Schutz des Grundkörpers vor äußeren Einwirkungen wie auch der Schutz vor schädlicher Strahleneinwirkung (UV-Strahlung) verstanden werden. Der Begriff "Dekorfunktion" ist somit breit zu interpretieren und geht über rein kosmetische Aufgaben hinaus.

Es hat sich herausgestellt, dass es problematisch ist, eine Kunststoffbeschichtung, die eine Dekorfunktion zu erfüllen hat, auf einem EPP-Grundkörper dauerhaft aufzubringen. Vielmehr sind bereits nach kurzer Zeit Ablösungserscheinungen zu beobachten. Erfindungsgemäß wird daher zunächst die später noch erläuterte Vorbehandlungs-Schicht auf den Grundkörper aufgebracht, deren Aufgabe darin besteht, die nachfolgend darüber aufgebrachte Füller-Schicht auf dem Grundkörper zu halten und eine dauerhafte Befestigung der Füller-Schicht auf dem Grundkörper zu gewährleisten.

Die Füllerschicht ihrerseits ist in der Lage, Unebenheiten, insbesondere die Vertiefungen zwischen den Granulatpartikeln des EPP-Materials aufzufüllen und dadurch die Oberfläche zu glätten. Die Oberfläche der Füller-Schicht ist somit erheblich glatter und ebener als die Oberfläche der darunter liegenden Vorbehandlungs-Schicht bzw. des EPP-Grundkörpers.

Die Dichte des expandierten Polypropylens kann im Bereich der Dekorfläche größer sein als in anderen Bereichen des Grundkörpers. Dadurch wird die Festigkeit des Grundkörpers im Bereich der Dekorfläche erhöht, was zu einer verbesserten Belastbarkeit führen kann.

Die Dekorfläche kann eine glattere Oberfläche aufweisen als die restlichen Oberflächen des Grundkörpers. Zu diesem Zweck kann es sinnvoll sein, das Formwerkzeug, in dem der Grundkörper erzeugt wird, an der der Dekorfläche zugeordneten Werkzeugfläche besonders zu bearbeiten, damit schon das Formwerkzeug die glattere Oberfläche der Dekorfläche unterstützt.

Insbesondere kann vorgesehen sein, dass die Dekorfläche keine sichtbaren Verdüsungs-Spuren des Werkzeugs aufweist, mit dem der Grundkörper geformt wurde. Wie oben bereits erläutert, ist es für das Herstellungsverfahren von EPP-Formteilen erforderlich, das das Werkzeug eine hohe Porosität aufweist, so dass Heißdampf von möglichst vielen Seiten durch die Form strömen und die Granulatpartikel miteinander verschmelzen kann. Die dafür erforderlichen Öffnungen in der Werkzeugform beeinträchtigen jedoch die Oberflächenqualität des späteren Formkörpers (hier: Grundkörper). Die Oberflächenqualität kann dadurch verbessert werden, dass im Bereich der Dekorfläche Verdüsungs-Spuren vermindert oder vermieden werden, indem das Formwerkzeug in diesem Bereich keine Verdüsungen aufweist. Dementsprechend muss durch eine geeignete Führung des Heißdampfs sichergestellt werden, dass dennoch sämtliche Granulatpartikel eine ausreichende Erwärmung erfahren, um die Versinterung zu ermöglichen.

Wenn die Dekorfläche keine sichtbaren Verdüsungs-Spuren zeigt, ist schon bei der Fertigung des Grundkörpers sichergestellt, dass eine verbesserte optische Qualität erreicht werden kann.

Die Vorbehandlungs-Schicht kann ausgebildet sein als Primer-Schicht (nachfolgend auch als "Primer" bezeichnet), Beflämmungs-Schicht (Behandeln der Dekorfläche mit einer Flamme bzw. Wärme), Fluorierungs-Schicht (Behandeln der Dekorfläche mit Fluor) oder als Plasmabehandlungs-Schicht. Es ist somit nicht erforderlich, dass die Vorbehandlung-Schicht durch ein eigenes Material gebildet wird bzw. einen Materialauftrag bedingt. Vielmehr ist es bei einigen der genannten Alternativen möglich, dass die Vorbehandlungs-Schicht allein durch entsprechend Bearbeitungsmaßnahmen erzeugt wird.

Die Primer-Schicht kann aus einem bei Raumtemperatur trockenbaren Material bestehen. Dadurch ist eine einfache Weiterverarbeitung des Grundkörpers möglich.

Als Material für die Primer-Schicht haben sich Produkte der Firma Mäder als geeignet erwiesen. Diese bestehen unter anderem aus halogenierten Polyolefinen und/oder Epoxidverbindungen, gelöst in organischen Lösungsmitteln oder Wasser.

Die Füller-Schicht kann aus einem Material bestehen, das ganz oder teilweise radikalisch polymerisiert ist. Die Polymerisation kann z.B. durch Aushärten mit UV-Licht erfolgen oder durch Peroxide initiiert werden. Ebenso ist es möglich, dass das Material der Füller-Schicht ganz oder teilweise durch Polyaddition oder durch Polykondensation gebildet ist.

Die Füller-Schicht kann einen UV-Schutz bilden. Dadurch wird der darunter liegende Grundkörper vor der Einwirkung von UV-Strahlen geschützt, so dass der Kunststoffformkörper auch im Außenbereich bzw. Einwirkungsbereich von Tageslicht eingesetzt werden kann. Durch den UV-Schutz der Füller-Schicht kann kein oder nur noch wenig UV-Licht zum Grundkörper gelangen und dort das EPP-Material schädigen.

Die Füller-Schicht kann eine Elastizität aufweisen, die wenigstens der Elastizität des Grundkörpers entspricht. Die Füller-Schicht ist mit Hilfe der Primer-Schicht mit dem EPP-Grundkörper fest und innig verbunden. Indem die Füller-Schicht eine Elastizität aufweist, die mindestens so hoch ist wie die Elastizität des Grundkörpers, ist sie in der Lage, den Bewegungen des elastischen Grundkörpers bei durch äußere Krafteinwirkung hervorgerufenen Verformungen des Kunststoffformkörpers zu folgen. Dadurch können die Scherspannungen, die in den Übergangsbereichen zwischen den diversen Schichten und dem Grundkörper auftreten, vermindert werden, so dass eine Trennwirkung reduziert wird. Wenn die Füller-Schicht steifer als der Grundkörper wäre, könnte sie die Verformungen des Grundkörpers nicht nachvollziehen, so dass die Gefahr bestünde, dass sich die Füller-Schicht vom Grundkörper ablöst.

Die Füller-Schicht kann eine höhere Kerbschlag-Zähigkeit aufweisen als der Grundkörper. Dies bewirkt einen hervorragenden mechanischen Schutz des Grundkörpers durch die Füller-Schicht. Mechanische Einwirkungen auf die Dekorfläche des fertigen Kunststoffformkörpers werden von der Füller-Schicht aufgenommen und auf eine größere Fläche verteilt, so dass die lokale Flächenpressung am EPP-Material des Grundkörpers sinkt. Dadurch ist insbesondere ein Schutz vor der mechanischen Einwirkung mit spitzen oder scharfkantigen Gegenständen gewährleistet.

Als Füller-Schicht kann eine aus einem flüssigen Kunststoff gebildete Schicht sein, die nachfolgend getrocknet oder ausgehärtet wird, um eine Kunststoff-Schicht zu bilden. Dabei hat sich das Material "Liquid-Foil" der Firma Mäder bewährt. Als Material sind Polymere geeignet, welche durch die Trocknungsmechanismen Polymerisation, Polykondensation oder Polyaddition oder eine Kombination dieser Trockungsmechanismen eine Kunststoffschicht bilden.

Auf der Füller-Schicht kann wenigstens eine Funktions-Schicht aufgebracht sein, die eine Anpassung des Kunststoffformkörpers an seinen späteren Einsatzzweck ermöglicht. Die Funktions-Schicht kann z.B. nach außen sichtbar bzw. Umgebungseinflüssen ausgesetzt sein.

Die Funktions-Schicht kann eine Farb-Schicht aufweisen, die weiter den optischen Eindruck der Dekorfläche verbessert. Sie kann ein- oder mehrschichtig aufgebaut sein. Die Farb-Schicht kann bestimmte Farbanforderungen erfüllen oder auch nur in Form einer Klarlackschicht erzeugt werden.

Die Funktions-Schicht - auch in ihrer Ausbildung als Farb-Schicht - kann ergänzend oder alternativ zu der Füller-Schicht einen UV-Schutz bilden.

Die Funktions-Schicht kann ebenso weitere Eigenschaften aufweisen und z.B. besondere haptische Anforderungen erfüllen oder elektrisch leitfähig, elektrisch schirmend, gleitend bzw. leicht gleitfähig (z.B. durch niedrigen Reibwert), gleithemmend (z.B. durch hohen Reibwert), antiknarzend (also zur Vermeidung von Knarzgeräuschen), flammhemmend, antibakteriell oder antihaftend (z.B. auch als Graffiti-Schutz) sein. Ergänzend oder alternativ kann die Funktions-Schicht auch andere Eigenschaften aufweisen, die mit Hilfe von Lacken bzw. Beschichtungen erzeugt werden können.

Die Primer-Schicht, die Füller-Schicht und/oder die Farb-Schicht können durch ein Spritzverfahren aufgebracht werden. Insbesondere hat es sich als besonders zweckmäßig erwiesen, wenn die Schichten in Form von entsprechenden Lagen aufgebracht bzw. aufgespritzt werden. So ist es möglich, eine Schicht aufzuspritzen, danach zu trocknen und so nach und nach die weiteren Schichten jeweils aufzubringen und zu trocknen.

Ein erfindungsgemäßes Verfahren zum Herstellen eines Kunststoffformkörpers weist demgemäß die Schritte auf: Formen eines Grundkörpers aus EPP, Aufbringen einer Vorbehandlungs-Schicht, z.B. einer Primer-Schicht, gegebenenfalls Trocknen der Primer-Schicht, wenn vorhanden, Aufbringen einer Füller-Schicht, Trocknen der Füller-Schicht, Aufbringen einer Funktions-Schicht, z.B. einer Farb-Schicht und Trocknen der Funktions-Schicht.

Es ist nicht zwingend erforderlich, dass auf die Füller-Schicht auch eine Funktions- bzw. Farb-Schicht aufgebracht wird. Vielmehr kann bereits die Füller-Schicht die erforderliche optische Qualität und mechanische Festigkeit aufweisen, die für den späteren Einsatz des Kunststoffformkörpers gewünscht wird. Ergänzend oder alternativ zu der Farb-Schicht kann auch eine Funktions-Schicht aufgebracht werden, die bestimmte haptische Erfordernisse erfüllt (z.B. Soft-Touch-Lackierung). Dabei ist es auch möglich, durch eine geeignete Lackschicht den Eindruck von anderen Materialien (z.B. Leder) nachzuahmen.

Der erfindungsgemäße Kunststoffformkörper kann sowohl im Innen- als auch im Außenbereich angewendet werden. Im Innenbereich eignet er sich z.B. für die Fahrgastzelle eines Kraftfahrzeugs, wo der Kunststoffformkörper als Teil einer Türverkleidung, des Armaturenbretts, einer Sitzverkleidung oder der Mittelkonsole zum Einsatz kommen kann. In diesem Fall kann die Interieur-Oberfläche bereits auf die Füller-Schicht aufgebracht sein.

Im Außenbereich kommt es neben der optischen Qualität auch auf die mechanische Festigkeit und Witterungsbeständigkeit an, die durch die entsprechenden Schichten auf dem EPP-Grundkörper sichergestellt werden.

Diese und weitere Vorteile und Merkmale der Erfindung werden nachfolgend anhand eines Beispiels unter Zuhilfenahme der begleitenden Figuren näher erläutert. Es zeigen:
- **Fig. 1**: einen Schnitt durch einen erfindungsgemäßen Kunststoffformkörper;
- **Fig. 2**: einen stark vergrößerten Ausschnitt aus Fig. 1.

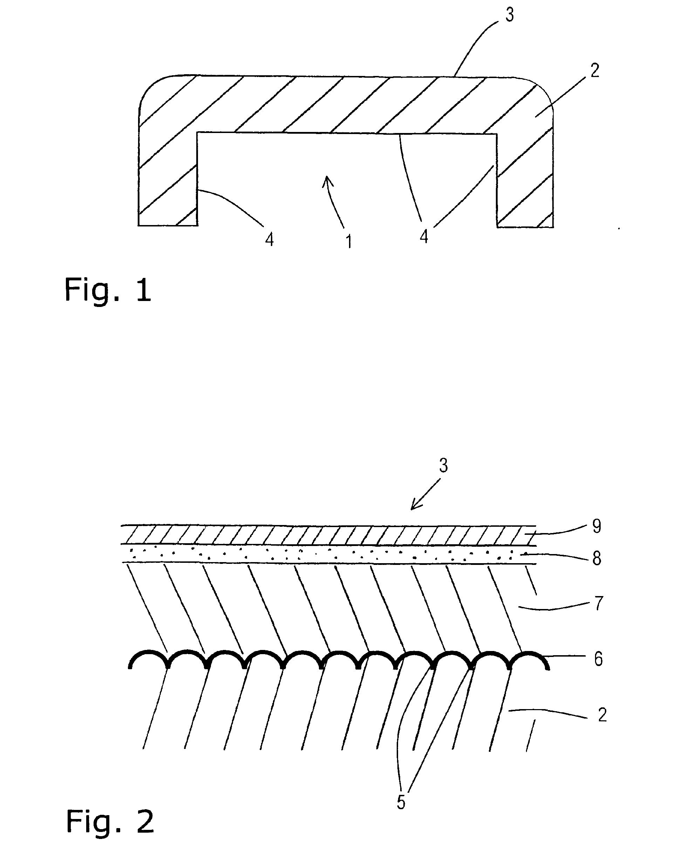

Fig. 1 zeigt in Schnittdarstellung einen erfindungsgemäßen Kunststoffformkörper 1 mit einem Grundkörper 2, der aus expandiertem Polypropylen (EPP) in an sich bekannter Weise hergestellt worden ist.

Der Grundkörper 2 weist an seiner Oberfläche eine Dekorfläche 3 auf, deren besondere optische bzw. mechanische Qualität für den späteren Einsatz des Kunststoffformkörpers wichtig ist. Die Dekorfläche 3 kann eben sein. Sie kann aber auch gekrümmt sein und sich z.B. über die Radien des in Fig. 1 gezeigten Grundkörpers 2 erstrecken. Dies hängt von dem späteren Anwendungsfall ab. Die Dekorfläche 3 ist von den restlichen Flächen des Grundkörpers 2 zu unterscheiden, an die keine besonderen Anforderungen in kosmetischer oder mechanischer Sicht gestellt werden bzw. die keine besondere Schutzfunktion für den Grundkörper 2 ausüben müssen. Dazu zählen in dem gezeigten Beispiel die Innenflächen 4.

Fig. 2 zeigt eine Ausschnittsvergrößerung des Kunststoffformkörpers 1 im Bereich der Dekorfläche 3.

Demnach ist erkennbar, dass an der Außenfläche des Grundkörpers 2 Vertiefungen ausgebildet sind, die beispielhaft mit dem Bezugszeichen 5 gekennzeichnet sind. Die Vertiefungen 5 entstehen in den Zwischenräumen zwischen den einzelnen Propylen-Granulatpartikeln (in der Fig. nicht gezeigt), aus denen der EPP-Körper gefertigt wird. Diese Vertiefungen 5 beeinträchtigen - wie oben bereits dargelegt - die optische Qualität der Außenfläche (Dekorfläche 3).

Auf dem Grundkörper 2 ist eine als Vorbehandlungs-Schicht dienende Primer-Schicht 6 als Lack mit einer Dicke von z.B. 0,5 bis 20 *µ*m, vorzugsweise 2 bis 4 *µ*m durch ein Hochdruckspritzverfahren oder ein ähnliches Verfahren aufgebracht. Die Primer-Schicht 6 muss nach dem Aufbringen getrocknet werden, z.B. für einen Zeitraum von 10 Minuten bei Raumtemperatur.

Nachfolgend wird auf die Primer-Schicht 6 eine Füller-Schicht 7 aufgebracht. Die Füller-Schicht 7 wird ebenfalls als Lack (Kunststoff-Schicht) aufgetragen, mit einer Dicke von 20 bis 2000 *µ*m, vorzugsweise 400 bis 600 *µ*m. Dazu eignet sich ein Hochdruckspritzverfahren, insbesondere ein Heißspritzverfahren, an das sich ein Trocknungsprozess anschließt. Die Füller-Schicht 7 kann auch durch Gies- oder Tauchapplikationen oder mittels Airlessspritzverfahren, Walzverfahren oder Niederdruckspritzverfahren aufgebracht werden. Das Trocknen kann mit Hilfe eines thermisch beschleunigten Verfahrens oder eines UV-Trocknungsverfahrens erfolgen. Die Füller-Schicht 7 kann einschichtig oder auch mehrschichtig mit Hilfe der beschriebenen Verfahren aufgetragen werden.

In Fig. 2 ist erkennbar, dass die Füller-Schicht 7 die Unebenheiten der Oberfläche des Grundkörpers 2 glättet und insbesondere auch die zwischen den Granulatpartikeln gebildeten Vertiefungen 5 auffüllt. Aufgrund der Dicke und der Elastizität/Flexibilität der Füller-Schicht 7 ist es möglich, dass sich die Füller-Schicht 7 über die raue, verhältnismäßig unebene Oberfläche des Grundkörpers 2 bzw. der nur sehr dünn aufgetragenen Primer-Schicht 6 legt. Die Oberfläche der Füller-Schicht 7 hingegen ist demgegenüber wesentlich glatter und ebener, so dass eine deutlich verbesserte Oberflächenqualität erreicht werden kann.

Nachfolgend kann auf die Füller-Schicht 7 eine Farb-Schicht 8 mit einer Dicke von z.B. 10 bis 60 *µ*m, vorzugsweise 20 bis 40 *µ*m aufgebracht werden. Dazu eignet sich ein Hochdruckspritzverfahren, an das sich eine Trocknungsphase anschließt. Die Trocknung kann z.B. durch UV-Trocknung oder bei Raumtemperatur über einen Zeitraum von 24 Stunden oder aber auch bei einer erhöhten Temperatur (z.B. 60°C) über z.B. 30 Minuten erfolgen.

Die Farb-Schicht 8 kann vielfältig ausgebildet sein und als Einschicht- oder Mehrschichtauftrag gebildet werden. Zudem kann auch eine Klarlack-Schicht 9 aufgebracht sein, wie Fig. 2 zeigt. Die Klarlack-Schicht 9 kann auch direkt auf die Füller-Schicht 7 aufgebracht werden, wenn keine besondere Farbwirkung gewünscht ist. Zudem kann die Füller-Schicht 7 selbst bereits in der erforderlichen Weise einfärbt sein.

Mit Hilfe des vorbeschriebenen Schichtaufbaus ist es möglich, die Oberfläche eines EPP-Grundkörpers mit zusätzlichen Qualitäten und Funktionen auszustatten. Dazu gehören insbesondere Dekor (Optik, Kosmetik), Haptik, Glanz, mechanische Belastbarkeit, UV-Beständigkeit (UV-Schutz des EPP-Grundkörpers durch die darüber liegenden Schichten), Gleitfähigkeit, elektrische Leitfähigkeit, elektrische Abschirmwirkung, Gleithemmung, Flammhemmung und chemische und physikalische Beständigkeit. Interessant kann auch eine Schicht sein, die Knarzgeräusche vermindert.

Die verschiedenen Kunststoff-Schichten in Verbindung mit den unterschiedlichen Trocknungsverfahren bewirken einen besonders großen Zusammenhalt und eine innige Verbindung mit dem EPP-Grundkörper 2. Dadurch haften die Schichten auch dann an dem Grundkörper 2, wenn er durch äußere Krafteinwirkung verformt oder lokal hohen Flächenpressungen ausgesetzt wird. Die lokalen Flächenpressungen können zum Teil durch den Mehrschichtaufbau aufgenommen und abgemildert werden, bevor sie auf den EPP-Grundkörper 2 einwirken.

## Patentansprüche

1. Kunststoffformkörper (1), mit
- einem Grundkörper (2), der zumindest teilweise aus expandiertem Polypropylen (EPP) besteht; und mit
- wenigstens einer Dekorfläche (3) des Grundkörpers (2), die an einer Seite des Grundkörpers (2) vorgesehen ist, die bei bestimmungsgemäßer Verwendung des Kunststoffformkörpers (1) eine bestimmte Dekorfunktion zu erfüllen hat; wobei
- auf der Dekorfläche (3) des Grundkörpers (2) eine Vorbehandlungs-Schicht (6) aufgebracht ist;
- auf der Vorbehandlungs-Schicht (6) eine Füller-Schicht (7) aufgebracht ist;
- die Vorbehandlungs-Schicht (6) zum Halten der Füller-Schicht (7) auf dem Grundkörper (2) dient; und wobei
- die Füller-Schicht (7) zum Ausgleichen von Unebenheiten auf der Dekorfläche (3) dient und einen mechanischen Schutz der Dekorfläche (3) bildet.

2. Kunststoffformkörper nach Anspruch 1, **dadurch gekennzeichnet, dass** die Dichte des expandierten Polypropylens im Bereich der Dekorfläche (3) größer ist als in anderen Bereichen des Grundkörpers (2).

3. Kunststoffformkörper nach einem der Ansprüche 1 oder 2, **dadurch gekennzeichnet, dass** die Dekorfläche (3) eine glattere Oberfläche aufweist als die restlichen Oberflächen des Grundkörpers (2);

4. Kunststoffformkörper nach einem der Ansprüche 1 bis 3, **dadurch gekennzeichnet, dass** die Dekorfläche (3) keine sichtbaren Verdüsungs-Spuren des Werkzeugs, mit dem der Grundkörper (2) geformt wurde, aufweist.

5. Kunststoffformkörper nach einem der vorstehenden Ansprüche, **dadurch gekennzeichnet, dass** die Vorbehandlungs-Schicht eine Schicht ist, ausgewählt aus der Gruppe:
- Primer-Schicht (6);
- Beflämmungs-Schicht;
- Fluorierungs-Schicht;
- Plasmabehandlungs-Schicht.

6. Kunststoffformkörper nach Anspruch 5, **dadurch gekennzeichnet, dass** die Vorbehandlungs-Schicht eine Primer-Schicht (6) ist, die aus einem Material mit halogenierten Polyolefinen besteht.

7. Kunststoffformkörper nach einem der Ansprüche 1 bis 6, **dadurch gekennzeichnet, dass** die Füller-Schicht (7) aus einem Material besteht, dass
- ganz oder teilweise radikalisch polymerisiert ist;
- ganz oder teilweise durch Polyaddition gebildet ist; und/oder
- ganz oder teilweise durch Polykondensation gebildet ist.

8. Kunststoffformkörper nach einem der Ansprüche 1 bis 7, **dadurch gekennzeichnet, dass** die Füller-Schicht (7) einen UV-Schutz bildet.

9. Kunststoffformkörper nach einem der Ansprüche 1 bis 8, **dadurch gekennzeichnet, dass** die Füller-Schicht (7) eine Elastizität aufweist, die wenigstens der Elastizität des Grundkörpers (2) entspricht.

10. Kunststoffformkörper nach einem der Ansprüche 1 bis 9, **dadurch gekennzeichnet, dass** die Füller-Schicht (7) eine höhere Kerbschlag-Zähigkeit aufweist als der Grundkörper (2).

11. Kunststoffformkörper nach einem der Ansprüche 1 bis 10, **dadurch gekennzeichnet, dass** die Füller-Schicht (7) aus einem Material besteht, das Polymere aufweist, die durch die Trocknungsmechanismen Polymerisation, Polykondensation oder Polyaddition oder eine Kombination von vorangegangen Trocknungsmechanismen eine Kunststoffschicht bilden.

12. Kunststoffformkörper nach einem der Ansprüche 1 bis 11, **dadurch gekennzeichnet, dass** auf der Füller-Schicht (7) wenigstens eine Funktions-Schicht (8, 9) aufgebracht ist.

13. Kunststoffformkörper nach Anspruch 12, **dadurch gekennzeichnet, dass** die Funktions-Schicht eine Schicht ist, ausgewählt aus der Gruppe, die wenigstens eine der folgenden Eigenschaften aufweist:
- Farb-Schicht (8, 9),
- UV-Schutz,
- elektrisch leitfähig,
- elektrisch schirmend,
- gleitend,
- gleithemmend
- antiknarzend
- flammhemmend
- antibakteriell
- antihaftend

14. Kunststoffformkörper nach einem der Ansprüche 1 bis 13, **dadurch gekennzeichnet, dass** die Vorbehandlungs-Schicht, die Primer-Schicht (6), die Füller-Schicht (7), die Funktions-Schicht und/oder die Farb-Schicht (8, 9) durch ein Spritzverfahren, ein Hochdruckspritzverfahren, ein Niederdruckspritzverfahren, ein Tauchverfahren, ein Giesverfahren, ein Heißspritzverfahren, ein Airlessspritzverfahren und/oder ein Walzverfahren aufgebracht sind.

15. Verfahren zum Herstellen eines Kunststoffformkörpers, mit den Schritten:
- Formen eines Grundkörpers (2) aus expandiertem Polypropylen (EPP);
- Aufbringen einer Vorbehandlungs-Schicht (6) auf eine Dekorfläche (3) des Grundkörpers (2);
- Aufbringen einer Füller-Schicht (7);
- Trocknen der Füller-Schicht (7);
- Aufbringen einer Funktions-Schicht (8, 9);
- Trocknen der Funktions-Schicht (8, 9).
